# EUROPEAN PATENT APPLICATION

(11) **EP 4 840 974 A1**
(43) Date of publication of application: **18.11.2026**
(21) Application number: 24922138.3
(22) Date of filing: 12.11.2024
(51) Int. Cl.: C21D 8/12, C21D 9/00, C22C 38/00, C22C 38/60

(54) **METHOD FOR PRODUCING HOT-ROLLED STEEL SHEET FOR NON-ORIENTED ELECTROMAGNETIC STEEL SHEET AND METHOD FOR PRODUCING NON-ORIENTED ELECTROMAGNETIC STEEL SHEET**

(30) Priority: 01.02.2024 JP 2024014122
(71) Applicant: JFE Steel Corporation, Tokyo 100-0011 (JP)
(72) Inventor: MARUYAMA, Shigehiro, Tokyo 100-0011 (JP); SAITO, Hayato, Tokyo 100-0011 (JP); OKUBO, Tomoyuki, Tokyo 100-0011 (JP)
(74) Representative: Hoffmann Eitle
(86) International application number: PCT/JP2024/040144
(87) International publication number: WO 2025/164028

(57) **Abstract**

Proposed is a method for producing a hot-rolled steel sheet for a non-oriented electrical steel sheet having excellent magnetic properties by performing hot rolling on a thin slab. The production method includes casting molten steel having a chemical composition including, in mass%, C: ≤ 0.010%, Si: 2.50 to 5.00%, Mn: 0.10 to 3.00%, P: ≤ 0.100%, S: 0.0010 to 0.0050%, Al: ≤ 2.00%, N: ≤ 0.0080%, Cu: ≤ 1.00%, Mo: ≤ 0.050%, Zn: ≤ 0.010%, and Ti: ≤ 0.010%, with the balance being Fe and unavoidable impurities, into a steel slab having a predetermined thickness; holding the steel slab at a given temperature in a tunnel furnace by setting the surface temperature of the steel slab on the exit side of the tunnel furnace, the heat-retention time in the tunnel furnace, and the cooling rate of the steel slab from the exit side of the tunnel furnace to the entry side of a hot rolling mill to be in predetermined value ranges; and performing hot rolling by setting the temperatures on the entry and exit sides of the hot rolling mill, the strain rate during the first pass of hot rolling, and the coiling temperature to be in predetermined value ranges.

## Description

### Technical Field

The present invention relates to a method for producing a hot-rolled steel sheet for a non-oriented electrical steel sheet and a method for producing a non-oriented electrical steel sheet.

### Background Art

Non-oriented electrical steel sheets are materials used for the iron cores of motors or generators. In recent years, from the viewpoint of reducing CO₂ emissions, there has been a strong demand for higher efficiency in electrical devices. Therefore, non-oriented electrical steel sheets used as iron core materials are required to achieve even lower iron loss.

To reduce iron loss in a non-oriented electrical steel sheet, it is effective to increase the specific resistance by adding alloying elements such as Si, Al, and Mn, or to reduce the sheet thickness. However, high alloying and sheet thickness reduction lead to an increase in rolling load during cold rolling, making a steel sheet more susceptible to o fracture. Reducing the thickness of a hot-rolled steel sheet to be subjected to cold rolling can reduce the rolling load during cold rolling. In such a case, however, the rolling load during hot rolling increases, making it difficult to perform shape control, which is problematic.

To address the above problem, a method for producing a non-oriented electrical steel sheet using a steel slab thinner than conventional steel slabs (hereinafter referred to as a "thin slab") has been proposed. According to this method, a thin slab is produced using a continuous casting machine called a thin slab caster, and the thin slab is then subjected to rolling. By reducing the thickness of the steel slab, it is possible to reduce the rolling load during both hot rolling and cold rolling. In addition, in the method using a thin slab, slab reheating is often omitted by directly connecting the continuous casting machine (i.e., the thin slab caster) to a hot rolling mill. In such cases, energy costs can be significantly reduced.

As the method for producing a non-oriented electrical steel sheet using a thin slab, a method disclosed in Patent Literature 1 can be cited as an example. Patent Literature 1 discloses a technology in which a steel slab having a thickness of 50 mm or more and 200 mm or less is held at a given temperature and then subjected to hot rolling to form a hot-rolled steel sheet having a thickness of 0.4 mm to 2.0 mm.

### Citation List

### Patent Literature

Patent Literature 1: International Publication No. WO 2023/095637

### Summary of Invention

### Technical Problem

However, each of the conventional technologies has the following problems to be solved.

Specifically, in the method disclosed in Patent Literature 1, a steel slab is subjected to hot rolling while being maintained at a high temperature. Therefore, precipitates may not sufficiently form or coarsen in steel before the hot rolling, and thus may form as fine precipitates during the hot rolling. Such fine precipitates refine the steel microstructure, which increases in iron loss of the resulting non-oriented electrical steel sheet.

Specifically, to solve the above problems of the conventional technologies, the present invention aims to obtain a hot-rolled steel sheet in which the formation of fine precipitates is suppressed when a thin slab is subjected to hot-rolling while maintaining a high temperature through a heat-retention treatment. The present invention also aims to produce a non-oriented electrical steel that can suppress the increase in iron loss using the hot-rolled steel sheet.

### Solution to Problem

As a result of extensive studies, the inventors have found that by controlling the S content and setting various conditions of a hot rolling step to be in appropriate ranges, it is possible to suppress the formation of fine precipitates, thereby suppressing an increase in iron loss in a non-oriented electrical steel sheet produced using a thin slab.

That is, a method for producing a hot-rolled steel sheet for a non-oriented electrical steel sheet according to the present invention that advantageously solves the foregoing problems includes:
casting molten steel into a steel slab having a thickness in a range of 30 mm or more and 180 mm or less, the molten steel having a chemical composition including, in mass%,
C: 0.010% or less, Si: 2.50% or more and 5.00% or less, Mn: 0.10% or more and 3.00% or less, P: 0.100% or less, S: 0.0010% or more and 0.0050% or less, Al: 2.00% or less, N: 0.0080% or less, Cu: 1.00% or less, Mo: 0.050% or less, Zn: 0.010% or less, and Ti: 0.010% or less, and further optionally including at least one group of elements selected from among Group A: at least one element selected from the group consisting of Sn: 0.20% or less and Sb: 0.20% or less, Group B: at least one element selected from the group consisting of Mg: 0.0001% or more and 0.10% or less and REM: 0.0001% or more and 0.10% or less, Group C: B: 0.002% or more and 0.01% or less, Group D: Ni: 0.01% or more and 1.0% or less, Group E: Cr: 0.1% or more and 5.0% or less, Group F: at least one element selected from the group consisting of V: 0.001% or more and 0.050% or less, Nb: 0.001% or more and 0.005% or less, Ta: 0.0001% or more and 0.0020% or less, W: 0.001% or more and 0.050% or less, and Pb: 0.0001% or more and 0.0020% or less, Group G: Co: 0.001% or more and 0.100% or less, Group H: at least one element selected from the group consisting of Ga: 0.0005% or more and 0.0300% or less and Ge: 0.0005% or more and 0.0300% or less, and Group I: As: 0.001% or more and 0.020% or less, with a balance being Fe and unavoidable impurities;
a heat-retention step in which the steel slab is maintained at a given temperature in a tunnel furnace; and
a hot rolling step in which the steel slab is hot-rolled,
characterized in that
the heat-retention step includes
   setting a surface temperature of the steel slab on an entry side of the tunnel furnace to 850°C or higher,
   setting the surface temperature of the steel slab on an exit side of the tunnel furnace in a range of 1050°C or higher and 1200°C or lower, and
   setting a heat-retention time in the tunnel furnace to 8 minutes or longer,
the hot rolling step is performed under conditions where
   a cooling rate of the steel slab from the exit side of the tunnel furnace to an entry side of a hot rolling mill is set to 4°C/s or lower,
   a temperature on the entry side of the hot rolling mill is set to 950°C or higher,
   a temperature on an exit side of the hot rolling mill is set to 800°C or higher,
   a strain rate during a first pass of hot rolling is set to 1.5/s or higher, and
   a coiling temperature is set to 500°C or higher.

It should be noted that, in a more preferred embodiment of the method for producing a hot-rolled steel sheet for a non-oriented electrical steel sheet according to the present invention, the molten steel is tapped from an electric furnace or a converter.

In addition, a method for producing a non-oriented electrical steel sheet according to the present invention that advantageously solves the foregoing problems is characterized in that the method includes a hot-rolled steel sheet production step in which a hot-rolled steel sheet is produced using any of the above methods for producing a hot-rolled steel sheet for a non-oriented electrical steel sheet, a hot-rolled sheet annealing step in which the hot-rolled steel sheet is annealed to form a hot-rolled annealed steel sheet, a cold rolling step in which the hot-rolled annealed steel sheet is cold-rolled to form a cold-rolled steel sheet, and a finishing annealing step in which the cold-rolled steel sheet is subjected to finishing annealing.

### Advantageous Effects of Invention

According to the present invention, it is possible to obtain a hot-rolled steel sheet in which the formation of fine precipitates is suppressed when hot rolling is performed while maintaining a high temperature through heat-retention treatment. By using such a hot-rolled steel sheet, a non-oriented electrical steel sheet having good magnetic properties can be produced.

### Brief Description of Drawings

[Fig. 1] is a graph illustrating the relationship between the S content and the iron loss W_{10/400} of a non-oriented electrical steel sheet according to Experiment 1.
[Fig. 2] is a graph illustrating the relationship between the temperature of a steel slab on the entry side of a hot rolling mill during hot rolling for a non-oriented electrical steel sheet according to Experiment 2 and the iron loss W_{10/400}.
[Fig. 3] is a graph illustrating the relationship between the strain rate during the first pass of hot rolling for a non-oriented electrical steel sheet according to Experiment 3 and the iron loss W_{10/400}.

### Description of Embodiments

To explain an embodiment of the present invention, experiments conducted to develop the present invention will first be described. In the following description, "%" representing a chemical composition denotes mass percent unless otherwise specified.

### <Experiment 1>

The inventors have focused on controlling MnS, which finely precipitates in steel and increases iron loss, and measured iron loss. Steel having a basic composition including C: 0.002%, Si: 3.00%, Mn: 0.50%, P: 0.01%, Al: 0.50%, N: 0.0020%, Cu: 0.01%, Mo: 0.010%, Zn: 0.001%, and Ti: 0.002%, with the balance being Fe and unavoidable impurities was used. Molten steel was produced by adding S in an amount varied within the range of 0.0001 to 0.0070%, and the molten steel was cast into a steel slab with a thickness of 60 mm. The steel slab was subsequently held at 1100°C in a tunnel furnace. Thereafter, a hot-rolled steel sheet with a thickness of 1.6 mm was formed under the following conditions: the temperature on the entry side of a hot rolling mill was set to 960°C, the strain rate during the first pass of hot rolling was set to 5.0/s, and the coiling temperature was set to 520°C. Next, hot-rolled sheet annealing was performed at an annealing atmosphere temperature of 980°C for 30 seconds. Then, cold rolling was performed to form a cold-rolled steel sheet with a thickness of 0.30 mm. Finally, finishing annealing was performed at a temperature of 960°C in a dry atmosphere with H₂:N₂ (volume% ratio) of 25:75 for 10 seconds. An Epstein sample measuring 30 mm in width × 280 mm in length was cut out of the thus obtained steel sheet in the rolling direction and the sheet width direction. Then, the iron loss W_{10/400} was measured with an Epstein tester.

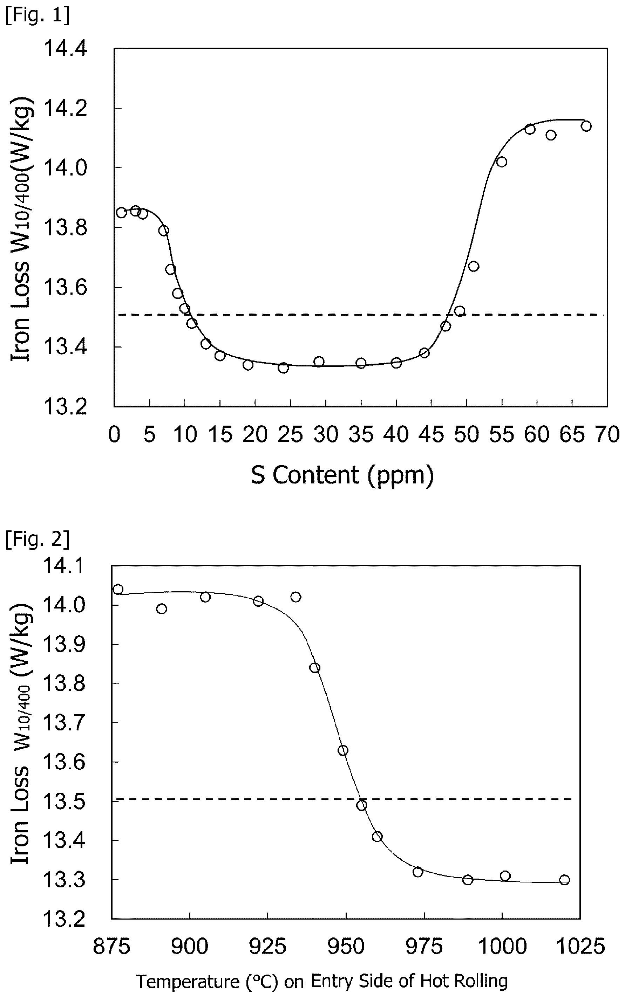

Fig. 1 illustrates the relationship between the S content and the iron loss W_{10/400} of the steel sheet. From Fig. 1, it has been clarified that controlling the S content to be in the range of 0.0010 to 0.0050% can reduce iron loss. In addition, the crystal grain size of the steel sheet, as observed with an optical microscope, was found to be coarse in the range where a reduction in iron loss was achieved.

From the foregoing experimental results, the inventors have inferred that the S content in the foregoing range reduced the influence of grain growth suppression by precipitates. Specifically, if the S content is less than 0.0010%, the number of the resulting MnS precipitates becomes small, which prevents precipitates with precipitation temperatures lower than the precipitation temperature of MnS, such as TiN and TiC, from forming using MnS as nuclei. Therefore, such precipitates are finely dispersed, thereby suppressing grain growth. If the S content exceeds 0.0050%, the number of the resulting MnS precipitates becomes large, thereby suppressing grain growth.

### <Experiment 2>

In light of the foregoing results, the inventors considered controlling the conditions of a hot rolling step to promote the formation of coarse precipitates and reduce fine precipitates, and studied the conditions necessary to achieve these. Steel having a basic composition including C: 0.002%, Si: 3.00%, Mn: 0.50%, P: 0.01%, Al: 0.50%, N: 0.0020%, Cu: 0.01%, Mo: 0.010%, Zn: 0.001%, Ti: 0.002%, and S: 0.0020%, with the balance being Fe and unavoidable impurities was used. Molten steel obtained by melting the steel was cast into a steel slab with a thickness of 60 mm. The steel slab was subsequently held at 1100°C in a tunnel furnace. Thereafter, a hot-rolled steel sheet having a thickness of 1.6 mm was formed under the following conditions: the temperature on the entry side of a hot rolling mill was varied in the range of 875 to 1025°C, the strain rate during the first pass of hot rolling was set to 5.0/s, and the coiling temperature was set to 520°C. The same procedure as in Experiment 1 was applied to the obtained hot-rolled steel sheet, and the iron loss were measured.

Fig. 2 illustrates the relationship between the temperature on the entry side of the hot rolling mill and the iron loss W_{10/400}. As illustrated in Fig. 2, the iron loss increased when the temperature on the entry side of the hot rolling mill was below 950°C. The inventors inferred that this is because strain is introduced during rolling, and when the driving force for precipitation is high and the steel sheet temperature is low, precipitates such as TiN and TiC form simultaneously with MnS and become finely dispersed. The inventors also inferred that when the steel sheet temperature is low, the growth of the precipitate particles is also suppressed, resulting in finer precipitates.

### <Experiment 3>

The inventors studied the influence of the strain rate during the first pass of hot rolling on the morphology of precipitates. Steel having a basic composition including C: 0.002%, Si: 3.00%, Mn: 0.50%, P: 0.01%, Al: 0.50%, N: 0.0020%, Cu: 0.01%, Mo: 0.010%, Zn: 0.001%, Ti: 0.002%, and S: 0.0020%, with the balance being Fe and unavoidable impurities was used. Molten steel obtained by melting the steel was cast into a steel slab with a thickness of 60 mm. The steel slab was subsequently held at 1100°C in a tunnel furnace. Thereafter, a hot-rolled steel sheet with a thickness of 1.6 mm was formed under the following conditions: the temperature on the entry side of a hot rolling mill was set to 960°C, the strain rate during the first pass of hot rolling was varied in the range of 0.2 to 4.2/s, and the coiling temperature was set to 520°C. The same procedure as in Experiment 1 was applied to the obtained hot-rolled steel sheet, and then the iron loss were measured.

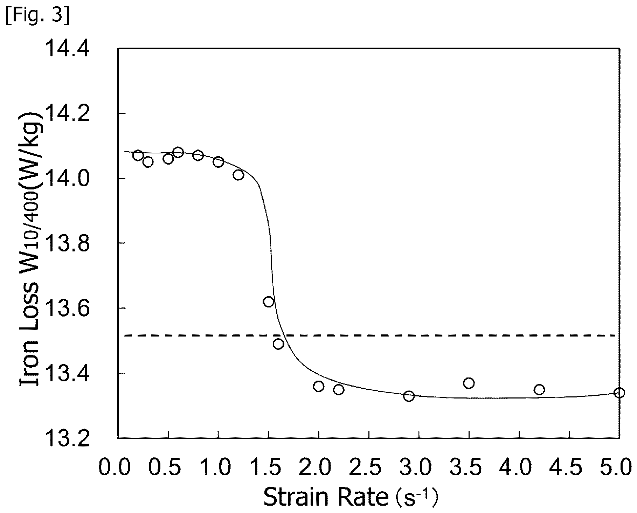

Fig. 3 illustrates the relationship between the strain rate during the first pass of hot rolling and the iron loss W_{10/400}. As illustrated in Fig. 3, iron loss increased when the strain rate during the first pass of hot rolling was set to lower than 1.5/s. The inventors have inferred that since the driving force for precipitation becomes low when the strain rate is low, MnS does not precipitate sufficiently during the first pass of hot rolling, but instead, it precipitates during the following passes where the rolling temperature is lower, thereby preventing fine precipitates, such as TiN and TiC, from forming around MnS.

From the results of Experiments 1 to 3 above, it has been found that even when a thin slab caster is used, an increase in iron loss can be suppressed by setting the S content to 0.0010% or more and 0.0050% or less, setting the temperature on the entry side of the hot rolling mill to 950°C or higher, and setting the strain rate during the first pass of hot rolling to 1.5/s. The present invention is based on such findings. An embodiment for carrying out the present invention will be specifically described below. Note that the present invention is not limited thereto.

### <Chemical composition>

The reasons for limiting the chemical composition of the molten steel in this embodiment will be described. Note that the cast thin slab also has a chemical composition equivalent to that of the molten steel.

### C: 0.010% or less

C is a harmful element that causes magnetic aging in the product sheet, forming carbides and thus increasing iron loss. Accordingly, in this embodiment, to suppress the magnetic aging, the C content is set to 0.010% or less. Preferably, the C content is set to 0.005% or less. Although no particular lower limit is imposed, from the view of reducing the decarburization cost, the lower limit of C content is preferably set to about 0.0001%.

### Si: 2.50% or more and 5.00% or less

Si needs to be added in an amount of 2.50% or more to increase the electrical resistance of the steel sheet, and thereby sufficiently reduce iron loss. Accordingly, in this embodiment, the Si content is set to 2.50% or more. Meanwhile, if the Si content exceeds 5.00%, it becomes difficult to perform rolling. Therefore, the Si content is set to 5.00% or less. Note that from the perspective of manufacturability, the Si content is preferably set to 4.00% or less.

### Mn: 0.10% or more and 3.00% or less

Mn, like Si and Al, has the effect of increasing the electrical resistance of the steel sheet, thereby reducing iron loss. Accordingly, in this embodiment, the Mn content is set to 0.10% or more. Meanwhile, if the Mn content exceeds 3.00%, Mn carbides precipitate, which in turn deteriorates iron loss. Therefore, the Mn content is set to 3.00% or less. Preferably, the Mn content is set in the range of 0.20% or more and 1.00% or less.

### P: 0.100% or less

P has the effect of increasing the strength of steel and can therefore be used to adjust the strength. Meanwhile, if the P content exceeds 0.100%, the steel becomes brittle, resulting in reduced manufacturability. Therefore, the P content is set to 0.100% or less. Although no particular lower limit is imposed, from the perspective of reducing the dephosphorization cost, the P content is preferably set to 0.001% or more. In addition, from the perspective of enhancing the effect of P addition, the P content is more preferably set to 0.005% or more, and further preferably, 0.010% or more.

### S: 0.0010% or more and 0.0050% or less

S is present primarily as MnS in steel, and can be made harmless by coprecipitating with precipitates, such as TiC and TiN, that adversely affect magnetic properties when precipitated alone. Accordingly, in this embodiment, the S content is set to 0.0010% or more. Meanwhile, if the S content exceeds 0.0050%, the number of the resulting MnS precipitates increases, which inhibits grain growth and increases iron loss. Therefore, the S content is set to 0.0050% or less. Preferably, the S content is set to 0.0010% or more and 0.0040% or less.

### Al: 2.00% or less

Al, like Si, has the effect of increasing the electrical resistance of the steel sheet, thereby reducing iron loss. However, if the Al content exceeds 2.00%, it becomes difficult to perform rolling. Therefore, the Al content is set to 2.00% or less. From the perspective of ensuring good castability, the Al content is preferably set to 1.50% or less. Meanwhile, although no particular lower limit is imposed, from the perspective of balancing iron loss and manufacturability, the Al content is preferably set to 0.20% or more, more preferably, 0.30% or more, and further preferably, 0.50% or more.

### N: 0.0080% or less

N is a harmful element that forms fine nitrides, thereby inhibiting grain growth and increasing iron loss. Therefore, the N content is preferably minimized. In particular, if the N content exceeds 0.0080%, the above adverse effects become pronounced, and thus the N content is set to 0.0080% or less. Preferably, the N content is set to 0.0030% or less. Meanwhile, from the perspective of iron loss, a lower N content is preferred, and no particular lower limit is imposed; the N content may even be 0%. However, since N is unavoidably contained in steel as impurities, excessive reduction increases production costs. Therefore, from the perspective of costs, the N content is preferably set to 0.0001% or more, and more preferably, 0.0005% or more.

### Cu: 1.00% or less

Cu has the effect of improving the magnetic flux density of the steel sheet. However, if the Cu content exceeds 1.00%, hot brittleness occurs, leading to surface defects. Therefore, when Cu is added, the Cu content is set to 1.00% or less. From the perspective of balancing magnetic properties and costs, the Cu content is preferably 0.1% or less. Meanwhile, although no particular lower limit is imposed, from the perspective of enhancing the effect of Cu addition, the Cu content is preferably set to 0.01% or more.

### Mo: 0.050% or less

Mo reacts with C to form carbides at grain boundaries, thereby improving strength. However, if the Mo content exceeds 0.050%, iron loss tends to increase. Thus, when Mo is added, the Mo content is set to 0.050% or less. Meanwhile, although no particular lower limit is imposed, from the perspective of improving strength, the Mo content is preferably 0.010% or more.

### Zn: 0.010% or less

Zn reacts with S to form coarse sulfides, thereby suppressing the precipitation of fine sulfides such as MnS and reducing iron loss. However, if the Zn content exceeds 0.010%, the number of the resulting sulfides increases, inhibiting grain growth and increasing iron loss. Therefore, the Zn content is set to 0.010% or less. Meanwhile, although no particular lower limit is imposed, from the perspective of reducing iron loss, the Zn content is preferably 0.001% or more.

### Ti: 0.010% or less

Ti reacts with C and N to form carbides and nitrides at grain boundaries, thereby improving strength, like Mo. However, if the Ti content exceeds 0.010%, the amount of the resulting carbides and nitrides increases, inhibiting grain growth and increasing iron loss. Therefore, the Ti content is set to 0.010% or less. Meanwhile, although no particular lower limit is imposed, from the perspective of improving strength, the Ti content is preferably 0.002% or more.

In the present embodiment, the molten steel has a chemical composition including C: 0.010% or less, Si: 2.50% or more and 5.00% or less, Mn: 0.10% or more and 3.00% or less, P: 0.100% or less, S: 0.0010% or more and 0.0050% or less, Al: 2.00% or less, N: 0.0080% or less, Cu: 1.00% or less, Mo: 0.050% or less, Zn: 0.010% or less, and Ti: 0.010% or less, with the balance being Fe and unavoidable impurities.

In the present embodiment, the chemical composition of the molten steel may further optionally include at least one group of elements selected from among Groups A to I below.
Group A: at least one element selected from the group consisting of Sn: 0.20% or less and Sb: 0.20% or less
Sn: 0.20% or less
Sn has the effect of suppressing nitridation and oxidation of the surface layer, thereby reducing iron loss. However, this effect becomes saturated when Sn is added in excess of 0.20%. Thus, when Sn is added, the Sn content is preferably set to 0.20% or less, and more preferably 0.10% or less. Meanwhile, from the perspective of enhancing the above effect, the Sn content is preferably 0.005% or more.

### Sb: 0.20% or less

Sb has the effect of suppressing nitridation and oxidation of the surface layer, thereby reducing iron loss. However, this effect becomes saturated when Sb is added in excess of 0.20%. Thus, when Sb is added, the Sb content is preferably set to 0.20% or less, and more preferably 0.10% or less. Meanwhile, from the perspective of enhancing the foregoing effect, the Sb content is preferably set to 0.005% or more.
Group B: at least one element selected from the group consisting of Mg: 0.0001% or more and 0.10% or less and REM: 0.0001% or more and 0.10% or less
Mg: 0.0001% or more and 0.10% or less
Mg fixes S as sulfides, thereby contributing to reducing iron loss. To obtain this effect, the Mg content may be set to 0.0001% or more. Meanwhile, this effect becomes saturated if the Mg content exceeds 0.10%, leading to an unnecessary increase in cost. Therefore, the upper limit of the Mg content is set to 0.10%. Therefore, the Mg content is preferably within the range of 0.0001% or more and 0.10% or less.

### REM: 0.0001% or more and 0.10% or less

REM (rare earth metal elements) is a group of elements that fix S as sulfides, thereby contributing to reducing iron loss. To obtain this effect, the REM content may be set to 0.0001% or more. Meanwhile, such an effect becomes saturated if the REM content exceeds 0.10%, leading to an unnecessary increase in cost. Thus, the upper limit of the REM content is set to 0.10%. Therefore, the REM content is preferably set in the range of 0.0001% or more and 0.10% or less. REM is a collective term for 17 elements including Sc, Y, and the lanthanides.

### Group C: B: 0.002% or more and 0.01% or less

B forms fine carbides in steel and increases the strength of the steel sheet. To obtain this effect, the B content may be set to 0.002% or more. Meanwhile, if the B content exceeds 0.01%, excessive carbides are formed, resulting in deterioration of iron loss. Therefore, the upper limit of the B content is set to 0.01%. Accordingly, the B content is preferably within the range of 0.002% or more and 0.01% or less.

### Group D: Ni: 0.01% or more and 1.0% or less

Ni improves the toughness of steel and may thus be added as appropriate. To obtain this effect, the Ni content may be set to 0.01% or more. However, this effect becomes saturated if the Ni content exceeds 1.0%. Therefore, the upper limit of the Ni content is set to 1.0%. Accordingly, the Ni content is preferably within the range of 0.01% or more and 1.0% or less.

### Group E: Cr: 0.1% or more and 5.0% or less

Cr has the effect of increasing the specific resistance of steel and thereby reducing iron loss. To obtain this effect, the Cr content may be set to 0.1% or more. Meanwhile, if the Cr content exceeds 5.0%, magnetic flux density decreases significantly due to a decrease in saturation magnetic flux density. Therefore, the upper limit of the Cr content is set to 5.0%. Accordingly, the Cr content is preferably set in the range of 0.1% or more and 5.0% or less.
Group F: at least one element selected from the group consisting of V: 0.001% or more and 0.050% or less, Nb: 0.001% or more and 0.005% or less, Ta: 0.0001% or more and 0.0020% or less, W: 0.001% or more and 0.050% or less, and Pb: 0.0001% or more and 0.0020% or less
V: 0.001% or more and 0.050% or less
V has the effect of increasing the strength of the steel sheet and may thus be added as appropriate. To obtain this effect, the V content may be set to 0.001% or more. However, if the V content exceeds 0.050%, fine precipitates are formed in the steel sheet, thereby increasing iron loss. Thus, the upper limit of the V content is set to 0.050%.

### Nb: 0.001% or more and 0.005% or less

Nb has the effect of increasing the strength of the steel sheet and may thus be added as appropriate. To obtain this effect, the Nb content may be set to 0.001% or more. However, when the Nb content exceeds 0.005%, fine precipitates are formed in the steel sheet, thereby increasing iron loss. Therefore, the upper limit of the Nb content is set to 0.005%.

### Ta: 0.0001% or more and 0.0020% or less

Ta has the effect of increasing the strength of the steel sheet and may thus be added as appropriate. To obtain this effect, the Ta content may be set to 0.0001% or more. However, if the Ta content exceeds 0.0020%, fine precipitates are formed in the steel sheet, thereby increasing iron loss. Therefore, the upper limit of the Ta content is set to 0.0020%.

### W: 0.001% or more and 0.050% or less

W has the effect of increasing the strength of the steel sheet and may thus be added as appropriate. To obtain this effect, the W content may be set to 0.001% or more. However, if the W content exceeds 0.050%, fine precipitates are formed in the steel sheet, thereby increasing iron loss. Therefore, the upper limit of the W content is set to 0.050%.

### Pb: 0.0001% or more and 0.0020% or less

Pb has the effect of increasing the strength of the steel sheet and may thus be added as appropriate. To obtain this effect, the Pb content may be set to 0.0001% or more. However, if the Pb content exceeds 0.0020%, fine precipitates are formed in the steel sheet, thereby increasing iron loss. Therefore, the upper limit of the Pb content is set to 0.0020%.

### Group G: Co: 0.001% or more and 0.100% or less

Co has the effect of increasing the magnetic flux density of the steel sheet and may thus be added as appropriate. To obtain this effect, the Co content may be set to 0.001% or more. However, adding a large amount of Co increases the alloying cost. Therefore, the upper limit of the Co content is set to 0.100%.
Group H: at least one element selected from the group consisting of Ga: 0.0005% or more and 0.0300% or less and Ge: 0.0005% or more and 0.0300% or less
Ga: 0.0005% or more and 0.0300% or less
Ga has the effect of improving the texture of the steel sheet, thereby increasing magnetic flux density, and may thus be added as appropriate. To obtain this effect, the Ga content may be set to 0.0005% or more. However, adding a large amount of Ga saturates this effect, and also increases the alloying cost. Therefore, the upper limit of the Ga content is set to 0.0300%.

### Ge: 0.0005% or more and 0.0300% or less

Ge has the effect of improving the texture of the steel sheet, thereby increasing magnetic flux density, and may thus be added as appropriate. To obtain this effect, the Ge content may be set to 0.0005% or more. However, adding a large amount of Ge saturates this effect and also increases the alloying cost. Therefore, the upper limit of the Ge content is set to 0.0300%.

### Group I: As: 0.001% or more and 0.020% or less

As is an element having the effect of increasing the strength of the steel sheet, and may thus be added as appropriate. To obtain this effect, the As content may be set to 0.001% or more. However, if the As content exceeds 0.020%, the risk of fracture during cold rolling increases. Therefore, the upper limit of the As content is set to 0.020%.

The unavoidable impurities, which include O (oxygen), may be contained in an amount of about 0.0050%. Among the above elements, elements whose contents are below their preferable effective ranges have no influence on the magnetic properties of the resulting product and therefore are allowable as unavoidable impurities.

### [Production conditions for hot-rolled steel sheet for non-oriented electrical steel sheet]

Next, the production conditions for producing a hot-rolled steel sheet for a non-oriented electrical steel sheet using molten steel having the above chemical composition will be described.

The method for producing a hot-rolled steel sheet for a non-oriented electrical steel sheet according to the present embodiment includes casting molten steel having the above chemical composition into a steel slab having a thickness in the range of 30 mm to 180 mm; a heat-retention step in which the steel slab is held at a given temperature in a tunnel furnace; and a hot rolling step in which hot rolling is performed. In the heat-retention step, the surface temperature of the steel slab on the entry side of the tunnel furnace is set to 850°C or higher, and the surface temperature of the steel slab on the exit side of the tunnel furnace is set within the range of 1050°C to 1200°C. The heat-retention time in the tunnel furnace is set to 8 minutes or longer, and the cooling rate of the steel slab from the exit side of the tunnel furnace to the entry side of a hot rolling mill is set to 4°C/s or lower. In the hot rolling step, a hot-rolled steel sheet is produced under the following conditions: the temperature on the entry side of the hot rolling mill is set to 950°C or higher, the temperature on the exit side of the hot rolling mill is set to 800°C or higher, the strain rate during the first pass of hot rolling is set to 1.5/s or higher, and the coiling temperature is set to 500°C or higher.

### [Step of producing molten steel]

A method for adjusting the chemical composition of the molten steel is not limited to any particular method, and any method may be employed. For example, a converter, an electric furnace, a vacuum degassing apparatus, and any other apparatuses and methods may be used to adjust the components of the molten steel. It is preferable that the molten steel be tapped from a converter or an electric furnace. For example, it is preferable to produce molten steel by melting reduced iron and scraps in an electric furnace, as this contributes to reducing CO₂ emissions.

### [Continuous casting step]

Next, the molten steel having the adjusted chemical composition is continuously cast into a steel slab. The method of continuous casting is not limited to a particular method, and may be performed in accordance with common procedures.

### Thickness of steel slab: 30 mm or more and 180 mm or less

In the above continuous casting step, a steel slab having a thickness of 30 mm or more and 180 mm is produced. If the thickness of the steel slab is less than 30 mm, the surface area of the slab relative to its volume increases, resulting in a higher cooling rate of the steel slab. Consequently, it becomes impossible to maintain the temperature of the steel slab during the hot rolling step. Therefore, the thickness of the steel slab is set to 30 mm or more. Meanwhile, if the thickness of the steel slab exceeds 180 mm, the rolling load during the hot rolling step increases, which leads to an increased risk of fracture of the steel strip. Therefore, the thickness of the steel slab is set to 180 mm or less.

### [Conveying step]

Next, the steel slab produced in the above continuous casting step is conveyed to a tunnel furnace used for heat-retention treatment. In the conveying step, it is important to convey the steel slab to the entry side of the tunnel furnace while maintaining the surface temperature of the steel slab at 850°C or higher. In other words, in this embodiment, the steel slab is conveyed such that its surface temperature does not fall below 850°C from the time it is produced in the continuous casting step until it reaches the furnace. If the surface temperature of the steel slab falls below 850°C, the energy required to reheat the slab increases, and the energy-saving effect cannot be obtained. Therefore, the surface temperature of the steel slab on the entry side of the tunnel furnace is set to 850°C or higher. Preferably, it is set to 900°C or higher. Although no specific upper limit is imposed on the surface temperature of the steel slab, considering that the steel slab is cooled to completely solidify during continuous casting, the surface temperature of the steel slab preferably does not exceed about 1200°C.

In the conveying step, the steel slab may be conveyed to the tunnel furnace after the slab is cut. However, from the perspective of suppressing a temperature drop of the slab, the steel slab is preferably conveyed directly to the tunnel furnace without being cut.

### [Heat-retention step]

Subsequently, heat-retention treatment is performed under the following conditions: the surface temperature of the steel slab on the exit side of the tunnel furnace is set to 1050°C or higher and 1200°C or lower, and the heat-retention time is set to 8 minutes or longer. Performing the heat-retention treatment promotes the formation and coarsening of precipitates such as MnS and AlN. This neutralizes the fine precipitates that inhibit grain growth during a hot-rolled sheet annealing step and a finishing annealing step in the production of a non-oriented electrical steel sheet.

### Surface temperature of steel slab on exit side of tunnel furnace: 1050°C or higher and 1200°C or lower

If the temperature of the steel slab is lower than 1050°C, sufficient coarsening of precipitates does not occur. Therefore, the precipitates remain as fine particles in the slab, thereby inhibiting grain growth during hot-rolled sheet annealing and finishing annealing. This increases iron loss in the resulting product. Therefore, the surface temperature of the steel slab on the exit side of the tunnel furnace, that is, the heat-retention temperature is set to 1050°C or higher, and preferably, 1100°C or higher. Meanwhile, if the heat-retention temperature is higher than 1200°C, precipitation does not proceed. Therefore, fine precipitates form during hot rolling after the heat-retention treatment. This inhibits grain growth during the hot-rolled sheet annealing step and the finishing annealing step, thereby increasing iron loss in the resulting product. Therefore, the heat-retention temperature is set to 1200°C or lower, and preferably, 1150°C or lower.

### Heat-retention time: 8 minutes or longer

If the heat-retention time in the tunnel furnace is shorter than 8 minutes, sufficient formation and coarsening of precipitates do not proceed. This inhibits grain growth during hot-rolled sheet annealing and finishing annealing, thereby increasing iron loss in the resulting product. Therefore, the heat-retention time is set to 8 minutes or longer. Meanwhile, although no particular upper limit is imposed on the heat-retention time, if the heat-retention time exceeds 30 minutes, the above effect becomes saturated, and the length of the tunnel furnace is increased, resulting in an increase in equipment costs. Therefore, the heat-retention time preferably does not exceed 30 minutes, and further preferably does not exceed 15 minutes.

The heating method used in the heat-retention treatment is not particularly limited. For example, any method such as induction heating, gas furnace heating, or electric furnace heating, may be used. However, when gas furnace heating is used, a large amount of scale is generated on the surface of the steel sheet due to the combustion gas. Therefore, during the hot rolling step described below, water is strongly sprayed to remove the scale, which increases the cooling rate of the steel slab. Thus, from the perspective of maintaining the steel slab at a high temperature, it is preferable to use a heating method using electric energy, such as induction heating or electric furnace heating.

### [Hot rolling step]

The steel slab is then conveyed to a hot rolling mill and subjected to a hot-rolling step in which the steel slab is hot-rolled and coiled to form a hot-rolled steel sheet. In this embodiment, to reduce iron loss, it is important to perform the hot rolling step under conditions satisfying (1) to (5) below to cause co-precipitation of fine precipitates, such as TiC and TiN, using MnS as nuclei.
(1) The cooling rate of the steel slab from the exit side of the tunnel furnace to the entry side of the hot rolling mill: 4°C/s or lower
(2) The surface temperature of the steel slab on the entry side of the hot rolling mill: 950°C or higher
(3) The strain rate during the first pass of hot rolling: 1.5/s or higher
(4) The temperature of the steel sheet on the exit side of the hot rolling mill: 800°C or higher
(5) The coiling temperature: 500°C or higher

### Cooling rate of steel slab: 4°C/s or lower

The steel slab that has undergone the heat-retention step reacts with oxygen in the atmosphere and forms scale on its surface. If the steel slab with the scale remaining on its surface is subjected to hot rolling, the scale becomes embedded in the slab, resulting in surface defects. Therefore, after the steel slab exits the tunnel furnace, it is descaled using high-pressure water. As a result, the scale on the surface is removed and the steel slab is cooled. During the process, if the cooling rate exceeds 4°C/s, the portions of the steel slab exposed to the high-pressure water are cooled rapidly and locally. This causes the temperature of the steel slab to drop significantly below the precipitation temperature of MnS, leading to the formation of fine precipitates such as TiC and TiN, which increases iron loss in the resulting product. Therefore, the cooling rate is set to 4°C/s or lower. Meanwhile, from the perspective of scale removal, a higher cooling rate is preferable. Therefore, the cooling rate of the steel slab is preferably set to 2°C/s or higher.

### Surface temperature of steel slab on entry side of hot rolling mill: 950°C or higher

If the surface temperature of the steel slab on the entry side of the hot rolling mill, that is, the temperature on the entry side is lower than 950°C, the driving force for precipitation increases. Accordingly, fine precipitates such as TiC and TiN are formed simultaneously with MnS, preventing co-precipitation using MnS as nuclei. Therefore, the temperature on the entry side of the hot rolling mill is set to 950°C or higher. Meanwhile, although no specific upper limit is imposed on the temperature on the entry side of the hot rolling mill, it is preferably set closer to the surface temperature of the steel slab on the exit side of the tunnel furnace, as this can suppress the precipitation of TiC and TiN.

### Strain rate during first pass of hot rolling: 1.5/s or higher

If the strain rate during the first pass of hot rolling is lower than 1.5/s, the introduction rate of dislocations that serves the driving force for precipitation becomes lower than the recovery rate of dislocations. As a result, the precipitation of MnS does not proceed sufficiently during hot rolling. Thus, the strain rate during the first pass of hot rolling is set to 1.5/s or higher. Although no particular upper limit is imposed on the strain rate during the first pass of hot rolling, an excessively high strain rate promotes the formation of fine precipitates such as TiC and TiN. Therefore, the strain rate during the first pass of hot rolling preferably does not exceed 4.0/s. Herein, the strain rate is calculated using Expressions (1) and (2) of Math. 1 below. [Math. 1] $\begin{matrix}\dot{ε} = \frac{ln \left(\frac{{h}_{1}}{{h}_{0}}\right)}{{t}_{c}} & \left(1\right) \\ {t}_{c} = \frac{\left({h}_{1}+2{h}_{0}\sqrt{R \left({h}_{1}-{h}_{0}\right)}\right)}{3 {v}_{0} {h}_{0}} & \left(2\right)\end{matrix}$

Herein, ε (with an emphasis mark) denotes the strain rate (1/s) during the first pass of hot rolling, h₀ denotes the thickness (m) of the steel slab before hot rolling, h₁ denotes the thickness (m) of the rolled material after the first pass of hot rolling, t_{c} denotes the time (s) required for the first pass of hot rolling, R denotes the roll diameter (m) for the first pass of hot rolling, and ν₀ denotes the threading speed (m/min) of the rolled material.

### Temperature of steel sheet on exit side of hot rolling mill: 800°C or higher

If the temperature of the hot-rolled steel sheet on the exit side of the hot rolling mill is lower than 800°C, the driving force for precipitation increases. Accordingly, fine precipitates such as TiC and TiN form simultaneously with MnS, preventing co-precipitation using MnS as nuclei. Therefore, the temperature of the hot-rolled steel sheet on the exit side of the hot rolling mill is set to 800°C or higher. Meanwhile, although no particular upper limit is imposed on the temperature of the hot-rolled steel sheet on the exit side of the hot rolling mill, it is preferably set closer to the temperature of the rolled material on the entry side of the hot rolling mill, as this can suppress the precipitation of TiC and TiN.

The number of passes of the hot rolling is not particularly limited and may be any number of 1 or more.

The sheet thickness on the exit side of finishing rolling of hot rolling, that is, the thickness of the finally obtained hot-rolled steel sheet is not particularly limited and may be of any thickness. However, if the sheet thickness on the exit side is less than 0.4 mm, the total length of the steel sheet may become excessively large, potentially reducing productivity. Therefore, from the perspective of productivity, the sheet thickness on the exit side of the finishing rolling is preferably set to 0.4 mm or more. Meanwhile, if the sheet thickness on the exit side exceeds 2.0 mm, the load on the cold rolling may become excessively high. Therefore, from the perspective of reducing the load on the cold rolling, the sheet thickness on the exit side of the finishing rolling is preferably set to 2.0 mm or less.

### Coiling temperature: 500°C or higher

If the coiling temperature is lower than 500°C, the driving force for the precipitation of TiC and TiN decreases. Accordingly, aging precipitation cannot occur in the coil state. Therefore, fine precipitates form in the following steps, which increases iron loss. Thus, the coiling temperature is set to 500°C or higher. Meanwhile, although no particular upper limit is imposed on the coiling temperature, performing coiling at high temperatures may cause the coil to deform. Therefore, the coiling temperature preferably does not exceed 550°C.

### [Production conditions for non-oriented electrical steel sheet]

The method for producing a non-oriented electrical steel sheet according to the present embodiment includes
a hot-rolled steel sheet production step in which a hot-rolled steel sheet is produced using the above production method,
a hot-rolled sheet annealing step in which the hot-rolled sheet is subjected to hot-rolled sheet annealing to form a hot-rolled annealed steel sheet,
a cold-rolling step in which the hot-rolled annealed steel sheet is cold-rolled to form a cold-rolled steel sheet, and
a finishing annealing step in which the cold-rolled steel sheet is subjected to finishing annealing. Each of the hot-rolled sheet annealing step, the cold rolling step, and the finishing annealing step of performing finishing annealing is not particularly limited, and may be carried out in accordance with conventional procedures.

It is also preferable to perform pickling after hot-rolled sheet annealing and prior to cold rolling. In addition, it is preferable to form an insulating coating on the surface of the non-oriented electrical steel sheet after finishing annealing. The pickling and the formation of the insulating coating are not particularly limited and may be carried out in accordance with conventional procedures.

### Examples

### <Example 1>

Steel slabs having chemical compositions shown in Table 1 and a thickness of 60 mm were produced using a continuous casting process. Each steel slab was, without being cut, conveyed to an electric tunnel furnace while its surface temperature was maintained at 850°C or higher, and was subjected to heat-retention treatment in the electric furnace. The surface temperature of the steel slab on the exit side of the tunnel furnace was set to about 1100°C, and the heat-retention time was set to 10 minutes.

Next, scale on the surface layer of the steel slab was removed using high-pressure water, followed by five passes of hot rolling and then coiling so that a hot-rolled steel sheet was formed. In the hot rolling step, the cooling rate from the exit side of the tunnel furnace to the hot rolling mill was set to 3°C/s, and the surface temperature of the steel slab on the entry side of the hot rolling mill was set to 1000°C. The strain rate during the first pass of hot rolling was set to 3.0/s, the temperature of the steel sheet on the exit side of the hot rolling mill was set to 900°C, and the coiling temperature was set to 520°C.

The obtained hot-rolled steel sheet was subjected to hot-rolled sheet annealing at 1000°C for 30 seconds to form a hot-rolled annealed steel sheet. The hot-rolled annealed steel sheet was then subjected to cold rolling to form a cold-rolled steel sheet having a thickness of 0.30 mm. The cold-rolled steel sheet was subjected to finishing annealing at 1000°C for 10 seconds to obtain a non-oriented electrical steel sheet.

An Epstein sample measuring 30 mm in width × 280 mm in length was cut out of the obtained non-oriented electrical steel sheet in the rolling direction and the sheet width direction, and the iron loss W_{10/400} was measured with an Epstein tester. For samples having a sheet thickness of 0.30 mm, an iron loss W_{10/400} of 13.50 W/kg or less is regarded as good.

From the results in Table 1, it can be seen that a non-oriented electrical steel sheet having good iron loss characteristics can be obtained with the chemical composition that satisfies the conditions of the present invention. Regarding test Nos. 7, 13, 19, and 23, evaluation could not be performed because they fractured during production. In the chemical composition column, "-" indicates that the relevant component was not added or that it was present as unavoidable impurities.

**[Table 1]**

| No. | Chemical Composition (mass%) | | | | | | | | | | | | W_{10/400} (W/kg) | Remarks |
|---|---|---|---|---|---|---|---|---|---|---|---|---|---|---|
| | C | Si | Mn | P | S | Al | N | Cu | Mo | Zn | Ti | Others | | |
| 1 | 0.0001 | 3.06 | 0.51 | 0.010 | 0.0035 | 0.49 | 0.0028 | 0.01 | 0.011 | 0.001 | 0.003 | - | 13.23 | Invention Example |
| 2 | 0.010 | 3.05 | 0.49 | 0.001 | 0.0035 | 0.50 | 0.0028 | 0.01 | 0.011 | 0.001 | 0.002 | - | 13.42 | Invention Example |
| 3 | 0.011 | 2.90 | 0.50 | 0.010 | 0.0031 | 0.50 | 0.0032 | 0.01 | 0.010 | 0.001 | 0.003 | - | 13.55 | Comparative |
| 4 | 0.002 | 2.42 | 0.50 | 0.009 | 0.0033 | 0.49 | 0.0026 | 0.01 | 0.011 | 0.001 | 0.003 | - | 13.55 | Comparative |
| 5 | 0.002 | 2.51 | 0.50 | 0.009 | 0.0026 | 0.49 | 0.0032 | 0.01 | 0.010 | 0.001 | 0.002 | - | 13.45 | Invention Example |
| 6 | 0.002 | 4.85 | 0.50 | 0.009 | 0.0033 | 0.50 | 0.0001 | 0.01 | 0.010 | 0.001 | 0.003 | - | 13.12 | Invention Example |
| 7 | 0.002 | 5.04 | 0.50 | 0.010 | 0.0033 | 0.49 | 0.0031 | 0.01 | 0.011 | 0.001 | 0.003 | - | | Comparative |
| 8 | 0.002 | 2.99 | 0.09 | 0.011 | 0.0032 | 0.50 | 0.0025 | 0.01 | 0.010 | 0.001 | 0.002 | - | 13.64 | Comparative |
| 9 | 0.002 | 3.01 | 0.10 | 0.011 | 0.0033 | 0.50 | 0.0025 | 0.01 | 0.010 | 0.001 | 0.003 | - | 13.42 | Invention Example |
| 10 | 0.002 | 3.05 | 2.96 | 0.011 | 0.0034 | 0.51 | 0.0030 | 0.01 | 0.010 | 0.001 | 0.002 | - | 13.46 | Invention Example |
| 11 | 0.002 | 2.98 | 3.01 | 0.011 | 0.0034 | 0.49 | 0.0030 | 0.01 | 0.011 | 0.001 | 0.002 | - | 13.56 | Comparative |
| 12 | 0.002 | 2.90 | 0.50 | 0.095 | 0.0027 | 0.50 | 0.0033 | 0.01 | 0.011 | 0.001 | 0.003 | - | 13.35 | Invention Example |
| 13 | 0.002 | 3.08 | 0.49 | 0.106 | 0.0032 | 0.49 | 0.0026 | 0.01 | 0.010 | 0.001 | 0.003 | - | | Comparative |
| 14 | 0.002 | 2.99 | 0.50 | 0.011 | 0.0009 | 0.50 | 0.0033 | 0.01 | 0.010 | 0.001 | 0.002 | - | 13.74 | Comparative |
| 15 | 0.002 | 3.07 | 0.50 | 0.009 | 0.0011 | 0.50 | 0.0030 | 0.01 | 0.011 | 0.001 | 0.002 | - | 13.42 | Invention Example |
| 16 | 0.002 | 3.10 | 0.49 | 0.009 | 0.0049 | 0.51 | 0.0025 | 0.01 | 0.010 | 0.001 | 0.003 | - | 13.45 | Invention Example |
| 17 | 0.002 | 3.08 | 0.50 | 0.009 | 0.0053 | 0.20 | 0.0035 | 0.01 | 0.011 | 0.001 | 0.003 | - | 13.67 | Comparative |
| 18 | 0.002 | 3.06 | 0.50 | 0.010 | 0.0035 | 1.99 | 0.0027 | 0.01 | 0.011 | 0.001 | 0.003 | - | 13.23 | Invention Example |
| 19 | 0.002 | 3.05 | 0.49 | 0.010 | 0.0032 | 2.01 | 0.0031 | 0.01 | 0.011 | 0.001 | 0.003 | - | | Comparative |
| 20 | 0.002 | 3.03 | 0.51 | 0.011 | 0.0033 | 0.50 | 0.0078 | 0.01 | 0.010 | 0.001 | 0.003 | - | 13.45 | Invention Example |
| 21 | 0.002 | 3.05 | 0.51 | 0.010 | 0.0029 | 0.51 | 0.0082 | 0.01 | 0.011 | 0.001 | 0.002 | - | 13.74 | Comparative |
| 22 | 0.002 | 3.09 | 0.51 | 0.010 | 0.0030 | 0.49 | 0.0025 | 0.98 | 0.010 | 0.001 | 0.002 | - | 13.44 | Invention Example |
| 23 | 0.002 | 3.00 | 0.50 | 0.009 | 0.0027 | 0.50 | 0.0033 | 1.05 | 0.010 | 0.001 | 0.003 | - | | Comparative |
| 24 | 0.002 | 2.94 | 0.51 | 0.010 | 0.0031 | 0.50 | 0.0035 | 0.01 | 0.045 | 0.001 | 0.002 | - | 13.34 | Invention Example |
| 25 | 0.002 | 2.94 | 0.49 | 0.009 | 0.0029 | 0.30 | 0.0033 | 0.01 | 0.053 | 0.001 | 0.002 | - | 13.61 | Comparative |
| 26 | 0.002 | 2.94 | 0.49 | 0.010 | 0.0031 | 0.50 | 0.0032 | 0.01 | 0.010 | 0.010 | 0.002 | - | 13.49 | Invention Example |
| 27 | 0.002 | 2.92 | 0.50 | 0.011 | 0.0033 | 0.50 | 0.0027 | 0.01 | 0.011 | 0.013 | 0.003 | - | 13.56 | Comparative |
| 28 | 0.002 | 2.95 | 0.49 | 0.010 | 0.0033 | 0.50 | 0.0031 | 0.01 | 0.010 | 0.001 | 0.009 | - | 13.48 | Invention Example |
| 29 | 0.002 | 3.04 | 0.51 | 0.011 | 0.0027 | 0.50 | 0.0028 | 0.01 | 0.010 | 0.001 | 0.012 | - | 13.59 | Comparative |
| 30 | 0.002 | 2.99 | 0.50 | 0.011 | 0.0027 | 0.50 | 0.0032 | 0.01 | 0.010 | 0.001 | 0.002 | Sn:0.19 | 13.35 | Invention Example |
| 31 | 0.002 | 3.10 | 0.51 | 0.009 | 0.0034 | 0.50 | 0.0030 | 0.01 | 0.011 | 0.001 | 0.003 | Sn:0.21 | 13.46 | Invention Example |
| 32 | 0.002 | 2.98 | 0.50 | 0.009 | 0.0033 | 0.50 | 0.0029 | 0.01 | 0.011 | 0.001 | 0.002 | Sb:0.19 | 13.31 | Invention Example |
| 33 | 0.002 | 3.02 | 0.49 | 0.010 | 0.0031 | 0.50 | 0.0027 | 0.01 | 0.010 | 0.001 | 0.002 | Sb:0.21 | 13.45 | Invention Example |
| 34 | 0.002 | 3.10 | 0.49 | 0.01 | 0.0032 | 0.50 | 0.0025 | 0.01 | 0.010 | 0.001 | 0.002 | Mg:0.01,REM:0.01,B:0.005,Ni:0.1,Cr:0.5,V:0.01,Nb:0.002, Ta:0.001,W:0.03,Pb:0.001,Co:0.05,Ga:0.01,Ge:0.01,As:0.01 | 13.42 | Invention Example |

### <Example 2>

Steel having a chemical composition including C: 0.002%, Si: 3.00%, Mn: 0.50%, P: 0.01%, S: 0.0030%, Al: 0.50%, N: 0.0020%, Cu: 0.01%, Mo: 0.010%, Zn: 0.001%, and Ti: 0.002%, with the balance being Fe and unavoidable impurities was melted, and the molten steel was continuously cast into a steel slab. Then, a hot-rolled steel sheet for a non-oriented electrical steel sheet was produced under the conditions shown in Table 2.

The obtained hot-rolled steel sheet was subjected to hot-rolled sheet annealing at 1000°C for 30 seconds to form a hot-rolled annealed steel sheet. The hot-rolled annealed steel sheet was subjected to cold rolling to form a cold-rolled steel sheet having a thickness of 0.30 mm. Thereafter, the cold-rolled steel sheet was subjected to finishing annealing at 1000°C for 10 seconds to obtain a non-oriented electrical steel sheet.

An Epstein sample measuring 30 mm in width × 280 mm in length was cut out of the obtained non-oriented electrical steel sheet in the rolling direction and the sheet width direction, and the iron loss W_{10/400} was measured with an Epstein tester. For samples having a sheet thickness of 0.30 mm, an iron loss W_{10/400} of 13.50 W/kg or less is regarded as good.

From the results shown in Table 2, it can be seen that a non-oriented electrical steel sheet having good iron loss characteristics can be obtained under the production conditions that satisfy the conditions of the present invention.

**[Table 2]**

| No. | Slab thickness | Tunnel Furnace | | | Hot Rolling | | | | | W_{10/400} | Remarks |
|---|---|---|---|---|---|---|---|---|---|---|---|
| | | Entry Side Temperature | Exit Side Temperature | Heat-retention Time | Cooling Rate | Entry Side Temperature | Exit Side Temperature | Strain Rate | Coiling Temperature | | |
| | mm | °C | °C | min | °C/s | °C | °C | 1/s | °C | W/kg | |
| 35 | 60 | 903 | 1093 | 10 | 2.7 | 990 | 836 | 3.4 | 527 | 13.21 | Invention Example |
| 36 | 25 | 908 | 1086 | 11 | 2.6 | 980 | 836 | 3.0 | 540 | 13.64 | Comparative Example |
| 37 | 30 | 916 | 1097 | 11 | 2.1 | 988 | 833 | 3.0 | 526 | 13.45 | Invention Example |
| 38 | 175 | 912 | 1102 | 10 | 2.7 | 984 | 832 | 3.1 | 533 | 13.42 | Invention Example |
| 39 | 60 | 842 | 1109 | 9 | 2.3 | 976 | 830 | 3.0 | 520 | 13.67 | Comparative Example |
| 40 | 60 | 855 | 1108 | 10 | 2.3 | 981 | 847 | 3.3 | 521 | 13.49 | Invention Example |
| 41 | 60 | 900 | 1035 | 10 | 2.5 | 970 | 846 | 2.6 | 527 | 13.56 | Comparative Example |
| 42 | 60 | 894 | 1052 | 11 | 2.5 | 984 | 849 | 3.2 | 528 | 13.41 | Invention Example |
| 43 | 60 | 897 | 1193 | 10 | 2.2 | 986 | 839 | 3.2 | 533 | 13.38 | Invention Example |
| 44 | 60 | 896 | 1211 | 10 | 2.8 | 987 | 846 | 3.3 | 520 | 13.52 | Comparative Example |
| 45 | 60 | 891 | 1115 | 7 | 2.4 | 983 | 835 | 3.4 | 534 | 13.59 | Comparative Example |
| 46 | 60 | 919 | 1105 | 8 | 2.2 | 978 | 837 | 3.2 | 530 | 13.47 | Invention Example |
| 47 | 60 | 900 | 1117 | 9 | 4.3 | 984 | 832 | 2.8 | 526 | 13.61 | Comparative Example |
| 48 | 60 | 908 | 1086 | 10 | 3.9 | 988 | 844 | 3.1 | 538 | 13.45 | Invention Example |
| 49 | 60 | 899 | 1088 | 11 | 2.5 | 934 | 848 | 2.9 | 530 | 13.56 | Comparative Example |
| 50 | 60 | 897 | 1105 | 11 | 2.5 | 955 | 838 | 2.8 | 527 | 13.49 | Invention Example |
| 51 | 60 | 911 | 1097 | 10 | 2.7 | 980 | 786 | 3.2 | 523 | 13.58 | Comparative Example |
| 52 | 60 | 912 | 1120 | 11 | 2.2 | 978 | 805 | 2.7 | 536 | 13.42 | Invention Example |
| 53 | 60 | 910 | 1089 | 10 | 2.4 | 980 | 839 | 1.4 | 520 | 13.55 | Comparative Example |
| 54 | 60 | 894 | 1115 | 9 | 2.5 | 984 | 836 | 1.6 | 534 | 13.45 | Invention Example |
| 55 | 60 | 907 | 1092 | 11 | 2.9 | 988 | 836 | 3.5 | 492 | 13.57 | Comparative Example |
| 56 | 60 | 899 | 1094 | 9 | 2.2 | 974 | 844 | 2.6 | 503 | 13.41 | Invention Example |

## Claims

1. A method for producing a hot-rolled steel sheet for a non-oriented electrical steel sheet, comprising:
casting molten steel into a steel slab having a thickness in a range of 30 mm or more and 180 mm or less, the molten steel having a chemical composition including, in mass%:
C: 0.010% or less,
Si: 2.50% or more and 5.00% or less,
Mn: 0.10% or more and 3.00% or less,
P: 0.100% or less,
S: 0.0010% or more and 0.0050% or less,
Al: 2.00% or less,
N: 0.0080% or less,
Cu: 1.00% or less,
Mo: 0.050% or less,
Zn: 0.010% or less, and
Ti: 0.010% or less,
and further optionally including at least one group of elements selected from among:
Group A: at least one element selected from the group consisting of Sn: 0.20% or less and Sb: 0.20% or less,
Group B: at least one element selected from the group consisting of Mg: 0.0001% or more and 0.10% or less and REM: 0.0001% or more and 0.10% or less,
Group C: B: 0.002% or more and 0.01% or less,
Group D: Ni: 0.01% or more and 1.0% or less,
Group E: Cr: 0.1% or more and 5.0% or less,
Group F: at least one element selected from the group consisting of V: 0.001% or more and 0.050% or less, Nb: 0.001% or more and 0.005% or less, Ta: 0.0001% or more and 0.0020% or less, W: 0.001% or more and 0.050% or less, and Pb: 0.0001% or more and 0.0020% or less,
Group G: Co: 0.001% or more and 0.100% or less,
Group H: at least one element selected from the group consisting of Ga: 0.0005% or more and 0.0300% or less and Ge: 0.0005% or more and 0.0300% or less, and
Group I: As: 0.001% or more and 0.020% or less,
with a balance being Fe and unavoidable impurities;
a heat-retention step in which the steel slab is maintained at a given temperature in a tunnel furnace; and
a hot rolling step in which the steel slab is hot-rolled,
**characterized in that**:
the heat-retention step includes setting a surface temperature of the steel slab on an entry side of the tunnel furnace to 850°C or higher, setting the surface temperature of the steel slab on an exit side of the tunnel furnace in a range of 1050°C or higher and 1200°C or lower, and setting a heat-retention time in the tunnel furnace to 8 minutes or longer, and
the hot rolling step is performed under conditions where a cooling rate of the steel slab from the exit side of the tunnel furnace to an entry side of a hot rolling mill is set to 4°C/s or lower, a temperature on the entry side of the hot rolling mill is set to 950°C or higher, a temperature on an exit side of the hot rolling mill is set to 800°C or higher, a strain rate during a first pass of hot rolling is set to 1.5/s or higher, and a coiling temperature is set to 500°C or higher.

2. The method for producing a hot-rolled steel sheet for a non-oriented electrical steel sheet according to claim 1, wherein
the molten steel is tapped from an electric furnace or a converter.

3. A method for producing a non-oriented electrical steel sheet, comprising:
a hot-rolled steel sheet production step in which a hot-rolled steel sheet is produced using the method for producing a hot-rolled steel sheet for a non-oriented electrical steel sheet according to claim 1 or 2;
a hot-rolled sheet annealing step in which the hot-rolled steel sheet is annealed to form a hot-rolled annealed steel sheet;
a cold rolling step in which the hot-rolled annealed steel sheet is cold-rolled to form a cold-rolled steel sheet; and
a finishing annealing step in which the cold-rolled steel sheet is subjected to finishing annealing.
